# EUROPEAN PATENT APPLICATION

(11) **EP 2 573 692 A1**
(43) Date of publication of application: **27.03.2013**
(21) Application number: 12172225.0
(22) Date of filing: 15.06.2012
(51) Int. Cl.: G06F 17/30, G06Q 10/06, G06Q 10/10

(54) **Method and system for providing research relation service**

(30) Priority: 26.09.2011 KR 20110096878
(71) Applicant: Korea Institute Of Science and Technology Information, Daejeon 305-806 (KR)
(72) Inventor: Jung, Han Min, 305-333 DAEJEON (KR); Lee, Mi Kyoung, 305-727 Daejeon (KR); Kim, Pyung, 305-150 DAEJEON (KR); Lee, Seung Woo, 305-333 DAEJEON (KR); Seo, Dong Min, 302-282 DAEJEON (KR); Kim, Jin Hyung, 448-160 GYEONGGI-DO (KR); Lee, Jin Hee, 305-301 Daejeon (KR); Sung, Won Kyung, 305-390 Daejeon (KR)
(74) Representative: Regimbeau

(57) **Abstract**

The present invention relates to a method and system for providing a research relation service, and the method includes the steps of (a) acquiring research technologies of a specific conduct agent; (b) acquiring comparison conduct agents for each of the acquired research technologies; (c) obtaining a research relation between a comparison conduct agent and the specific conduct agent; and (d) sorting and providing the comparison conduct agents based on the research relation. Therefore, according to the present invention, research relations such as research similarity, research cooperativeness and research competitiveness between conduct agents performing researches can be provided.

## Description

### BACKGROUND OF THE INVENTION

### Field of the Invention

The present invention relates to a method and system for providing a research relation service, and more specifically, to a method and system for providing a research relation service, in which comparison conduct agents are acquired for each research technology of a specific conduct agent, and a research relation between a comparison conduct agent and the specific conduct agent is obtained, and then the comparison conduct agents are sorted and provided based on the research relation.

### Background of the Related Art

The world is transferred to a knowledge-based industrial society in which knowledge and information determine competitiveness of a country, and particularly, competitiveness in science and technology of a country is recognized as a foundation of competitiveness of the country.

Therefore, many countries in the world are trying to draw and select core technologies and research subjects in advance and concentrate on research and development of the technologies so as to survive future competitions.

On this reason, the Gartner, a world-famous information technology research and consulting company, demonstrates the lifecycle of a technology through a graph of technology lifecycle from the aspect of exaggerative advertisement of the technology. The graph of technology lifecycle proposes only technologies belonging to a stage.

Therefore, required is a technique capable of presenting research fields and research relations between conduct agents which conduct researches.

### SUMMARY OF THE INVENTION

Therefore, the present invention has been made in view of the above problems, and it is an object of the present invention to provide a method and system for providing a research relation service, which can present research relations such as research similarity, research cooperativeness, research competitiveness and the like between conduct agents which conduct researches on various technologies.

To accomplish the above object, according to one aspect of the present invention, there is provided a computer implemented method of providing a research relation service by a research relation service providing apparatus, the method comprising the steps of: (a) acquiring research technologies of a specific conduct agent; (b) acquiring comparison conduct agents for each of the acquired research technologies; (c) obtaining a research relation between a comparison conduct agent and the specific conduct agent; and (d) sorting and providing the comparison conduct agents based on the research relation.

The research relation service providing method may further comprise the step of, before step (a), extracting research technologies and conduct agents by analyzing documents stored in a multi-document providing apparatus, accumulating conduct agents of each technology or technologies of each conduct agent, and constructing a database for storing the conduct agents of each technology or the technologies studied by each conduct agent.

The database stores at least one of conduct agents of each technology, research technologies of each conduct agent, joint research agents of each conduct agent, the number of joint research technologies of each conduct agent and a ratio thereof, the number of joint research documents of each conduct agent, and an accomplishment point calculated by applying a weighting factor of each time point or of each document type to the number of joint research documents.

The research relation includes at least one of research similarity, research cooperativeness, and research competitiveness.

The research similarity is obtained by acquiring research technologies studied by each of the two conduct agents for each conduct agent pair comprising a comparison conduct agent and the specific conduct agent, extracting a certain number of research technologies ranked on the top of the acquired research technologies of each conduct agent, obtaining a value of a similarity variable by comparing the extracted research technologies for each conduct agent pair, and using the value of the similarity variable.

The value of the similarity variable includes at least one of the number of common research technologies with respect to a certain number of research technologies and a ratio thereof, a ranking difference of a common research technology, and weight of research of a common research technology with respect to a certain number of research technologies.

The research similarity is obtained using at least one of a value of a similarity variable among similarity variables of the number of common conduct agents with respect to the conduct agents and a ratio thereof, a ranking difference of a common conduct agent and weight of research of a common conduct agent with respect to a certain number of conduct agents, an average of the values of the three similarity variables, and a value of a similarity variable having a largest maximum value among the values of the three similarity variables.

The research cooperativeness is obtained by acquiring research technologies studied by each of the two conduct agents for each conduct agent pair comprising a comparison conduct agent and the specific conduct agent, extracting a certain number of research technologies ranked on the top of the acquired research technologies of each conduct agent, obtaining common research technologies by comparing the extracted research technologies for each conduct agent pair, extracting joint research documents by comparing documents of each common research technology for each conduct agent pair, and using the number of the joint research documents.

The research competitiveness is obtained by obtaining agents in a research competition relation by sorting conduct agent pairs that do not have research cooperativeness among the conduct agent pairs comprising a comparison conduct agent and the specific conduct agent in descending order of a value of research similarity, and determining the value of research similarity of the obtained agents in a research competition relation as the value of research competitiveness.

Step (d) includes the steps of: sorting the conduct agent pairs in descending order of each of the value of research similarity, the value of research cooperativeness and the value of research competitiveness, and extracting a certain number of conduct agent pairs ranked on the top; and displaying the conduct agent pairs extracted based on the value of research similarity, the value of research cooperativeness and the value of research competitiveness or comparison conduct agents of the extracted conduct agent pairs as a list.

The research relation service providing method may further comprise the step of, after step (d), if two comparison conduct agents or one comparison conduct agent and the specific conduct agent are selected from the displayed list of comparison conduct agents, sorting and displaying research technologies of two conduct agents corresponding to the selected conduct agent pair in order of weight of research.

Common research technologies among the displayed research technologies are interconnected, and the common research technologies are displayed after being separated into technologies in a cooperative relation and technologies not in a cooperative relation.

According to another aspect of the present invention, there is provided a research relation service providing apparatus including a storage and a processor, the apparatus comprising: a research relation calculation module for acquiring research technologies of a specific conduct agent, acquiring comparison conduct agents for each of the acquired research technologies, and obtaining a research relation between a comparison conduct agent and the specific conduct agent, by the processor; and a research relation information providing module for sorting the comparison conduct agents in descending order of the obtained value of research relation and providing information on the research relation, by the processor.

The research relation service providing apparatus may further comprise a database for storing at least one of conduct agents of each technology, research technologies of each conduct agent, joint research agent of each conduct agent, the number of joint research technologies of each conduct agent and a ratio thereof, the number of joint research documents of each conduct agent, and an accomplishment point calculated by applying a weighting factor of each time point or of each document type to the number of joint research documents.

The research relation service providing apparatus may further comprise a database construction module for extracting and accumulating research technologies and conduct agents by analyzing documents stored in a multi-document providing apparatus, and constructing a database for storing conduct agents of each technology or technologies studied by each conduct agent.

The research relation service providing apparatus may further comprise a research technology information providing module for, if two comparison conduct agents or one comparison conduct agent and the specific conduct agent are selected from the provided list of comparison conduct agents, sorting and displaying research technologies of two conduct agents corresponding to the selected conduct agent pair in order of weight of research.

If there are common research technologies among the displayed research technologies, the research technology information providing module interconnects corresponding common research technologies and displays the common research technologies by separating the common research technologies into technologies in a cooperative relation and technologies not in a cooperative relation.

The research relation calculation module includes: a conduct agent pair creation unit for acquiring research technologies of the specific conduct agent, acquiring comparison conduct agents of each acquired research technology, and creating conduct agent pairs comprising a comparison conduct agent and the specific conduct agent; a research technology acquisition unit for acquiring research technologies studied by each of the two conduct agents contained in the created conduct agent pair and extracting a certain number of research technologies ranked on the top of the acquired research technologies of each conduct agent; a research similarity calculation unit for obtaining a value of a similarity variable by comparing the extracted research technologies for each conduct agent pair and obtaining a value of research similarity using the value of the similarity variable; a research cooperativeness, calculation unit for acquiring common research technologies by comparing the extracted research technologies for each conduct agent pair, extracting joint research documents by comparing documents of each common research technology for each conduct agent pair, and obtaining a value of research cooperativeness based on the number of the joint research documents; and a research competitiveness calculation unit for obtaining agents in a research competition relation by sorting conduct agent pairs that do not have research cooperativeness among the conduct agent pairs comprising a comparison conduct agent and the specific conduct agent in descending order of a value of research similarity, and determining the value of research similarity of the obtained agents in a research competition relation as a value of research competitiveness.

The value of the similarity variable includes at least one of the number of common research technologies with respect to a certain number of research technologies and a ratio thereof, a ranking difference of a common research technology, and weight of research of a common research technology with respect to a certain number of research technologies.

The value of research similarity is obtained using at least one of a value of a similarity variable among similarity variables of the number of common conduct agents with respect to the conduct agents and a ratio thereof, a ranking difference of a common conduct agent and weight of research of a common conduct agent with respect to a certain number of conduct agents, an average of the values of the three similarity variables, and a value of a similarity variable having a largest maximum value among the values of the three similarity variables.

The research relation information providing module sorts the conduct agent pairs in descending order of each of the value of research similarity, the value of research cooperativeness and the value of research competitiveness, extracts a certain number of conduct agent pairs ranked on the top, and displays the conduct agent pairs extracted based on the value of research similarity, the value of research cooperativeness and the value of research competitiveness or comparison conduct agents of the extracted conduct agent pairs as a list.

### BRIEF DESCRIPTION OF THE DRAWINGS

FIG. 1 is a view showing a research relation service providing system according to the present invention.

FIG. 2 is a block diagram schematically showing the configuration of a research relation service providing apparatus according to the present invention.

FIG. 3 is a block diagram showing the configuration of a database construction module of FIG. 2.

FIG. 4 is a block diagram showing the configuration of a research relation calculation module of FIG. 2.

FIG. 5 is a flowchart illustrating a method of providing research relation information on a specific technology by a research relation service providing apparatus according to the present invention.

FIG. 6 is a flowchart illustrating a method of obtaining research similarity between conduct agents by a research relation service providing apparatus according to the present invention.

FIG. 7 is a flowchart illustrating a method of obtaining research cooperativeness by a research relation service providing apparatus according to the present invention.

FIG. 8 is a view showing an example of a research relation information providing screen according to the present invention.

FIG. 9 is a view showing an example of a research technology information providing screen according to the present invention.

### DESCRIPTION OF SYMBOLS

- 100:: Multi-document providing apparatus
- 200:: Research relation service providing apparatus
- 210:: Database construction module
- 220:: Database
- 230:: Input module
- 240:: Research relation calculation module
- 250:: Research relation information providing module
- 260:: Research technology information providing module

### DETAILED DESCRIPTION OF THE PREFERRED EMBODIMENT

The preferred embodiments of the invention will be hereafter described in detail, with reference to the accompanying drawings.

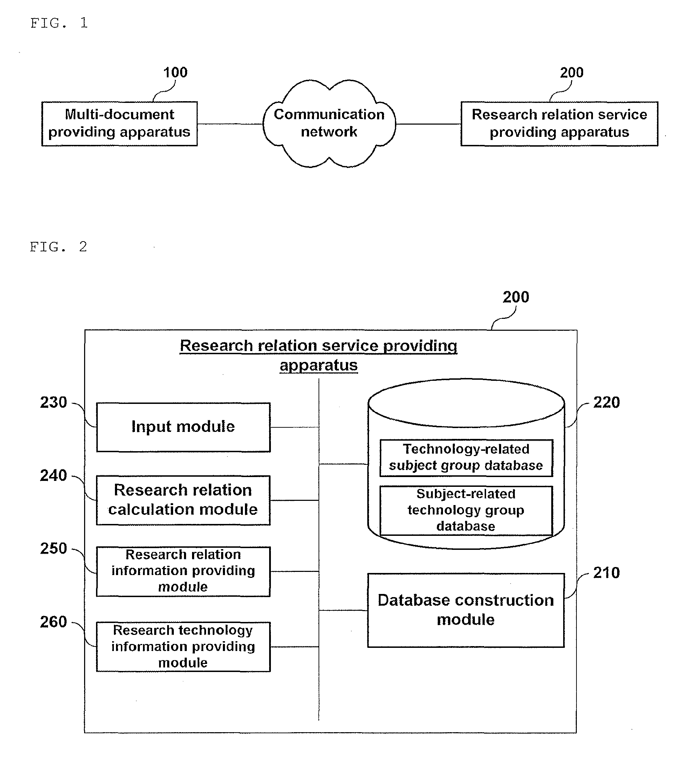

FIG. 1 is a view showing a research relation service providing system according to the present invention.

Referring to FIG. 1, the research relation service providing system includes a multi-document providing apparatus 100 and a research relation service providing apparatus 200.

The multi-document providing apparatus 100 integrates at least one of documents among papers, patents, reports, academic data, newspapers, and standards.

The research relation service providing apparatus 200 acquires research technologies of a specific conduct agent selected by a user, acquires comparison conduct agents for each of the acquired research technologies, and obtains a research relation between a comparison conduct agent and the specific conduct agent. Here, the comparison conduct agents are a certain number of conduct agents extracted among conduct agents conducting a research for each research technology.

For example, if there are N research technologies of the specific conduct agent and M comparison conduct agents, the research relation service providing apparatus 200 generates a research relation of N*M between the pair of the comparison conduct agent and the specific conduct agent.

In addition, the research relation service providing apparatus 200 sorts the comparison conduct agents based on the research relation and provides the sorted comparison conduct agents as a list, together with research relation values.

The research relation service providing apparatus 200 functioning as described above will be described in detail with reference to FIG. 2.

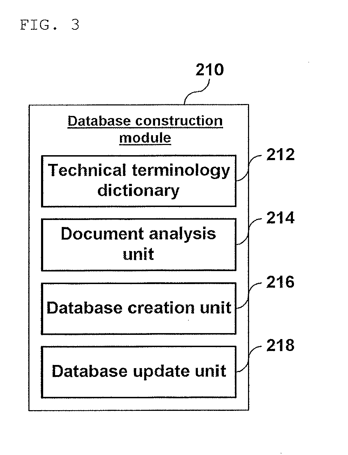

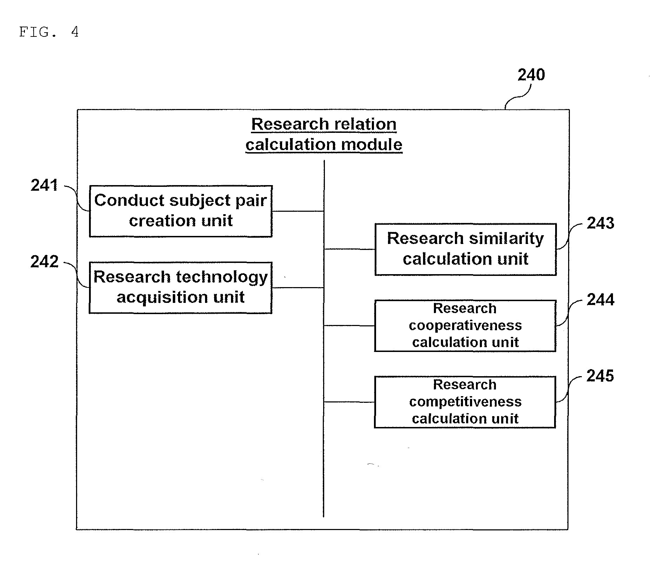

FIG. 2 is a block diagram schematically showing the configuration of a research relation service providing apparatus according to the present invention. FIG. 3 is a block diagram showing the configuration of a database construction module of FIG. 2. FIG. 4 is a block diagram showing the configuration of a research relation calculation module of FIG. 2.

Referring to FIG. 2, the research relation service providing apparatus 200 includes a database construction module 210, database 220, an input module 230, a research relation calculation module 240, a research relation information providing module 250, and a research technology information providing module 260.

The database construction module 210 analyzes the documents stored in the multi-document providing apparatus, extracts and accumulates technologies and conduct agents, and constructs a database for storing conduct agents of each technology or technologies studied by each conduct agent.

Referring to FIG. 3 for the database construction module 210, the database construction module 210 includes a technical terminology dictionary 212, a document analysis unit 214, a database creation unit 216, and a database update unit 218.

Technical terminologies are defined in the technical terminology dictionary 212. The technical terminologies are terminologies used in various fields such as a smart phone, an electronic paper, a PC and the like.

The document analysis unit 214 analyzes the documents stored in the multi-document providing apparatus, acquires documents including the terminologies stored in the technical terminology dictionary 212, and extracts conduct agents from the documents. That is, the document analysis unit 214 analyzes the documents using a method such as text mining, metadata analysis or the like, and extracts conduct agents which have announced the technologies and documents thereof as a result of the analysis. The conduct agents are countries, institutes, researchers and the like who have published the documents. For example, the document analysis unit 214 may extract technologies and conduct agents by analyzing bibliographies of the documents.

The database creation unit 216 accumulates the conduct agents of each technology or the technologies of each conduct agent acquired by the document analysis unit 214 and constructs the database 220 which stores the conduct agents of each technology or the technologies studied by each conduct agent.

Accordingly, the database created by the database creation unit 216 includes a technology-related agent group database for storing conduct agents of each technology and an agent-related technology group database for storing technologies studied by each conduct agent.

The agent-related technology group database stores information such as research technologies studied by each conduct agent, joint research agents, the number of joint research technologies and a ratio thereof, the number of joint research documents and the like.

The technology-related agent group database and the agent-related technology group database can be constructed as a single database. In this case, the database 220 stores information such as conduct agents of each technology, research technologies of each conduct agent, joint research agents, the number of joint research technologies and a ratio thereof, the number of joint research documents and the like.

If update of a document stored in the multi-document providing apparatus is sensed, the database update unit 218 acquires documents containing the technologies defined in the technical terminology dictionary 212 by analyzing the updated document, extracts and accumulates conduct agents from the acquired documents, and updates the database 220.

The input module 230 performs an interface with a user and performs a function of receiving a research relation providing command for a specific technology from the user. For example, the input module 230 refers to an interface module or a key input unit connected to a user terminal through a communication network.

The research relation calculation module 240 acquires research technologies of a specific conduct agent inputted through the input module 230 and comparison conduct agents of each research technology and obtains a research relation between a comparison conduct agent and the specific conduct agent. Here, the research relation includes research similarity, research cooperativeness, research competitiveness and the like.

Referring to the FIG. 4 for the research relation calculation module 240, the research relation calculation module 240 includes a conduct agent pair creation unit 241, a research technology acquisition unit 242, a research similarity calculation unit 243, a research cooperativeness calculation unit 244, and a research competitiveness calculation unit 245.

The conduct agent pair creation unit 241 acquires research technologies of the specific conduct agent by searching the database 220, acquires comparison conduct agents of each acquired research technology, and creates conduct agent pairs comprising two conduct agents of a comparison conduct agent and the specific conduct agent. That is, the conduct agent pair creation unit 241 searches the database 220 and acquires research technologies studied by the specific conduct agent. Then, the conduct agent pair creation unit 241 searches the database 220 and acquires conduct agents studying the research technologies for each research technology and extracts a certain number of conduct agents among the acquired conduct agents as the comparison conduct agents.

The research technology acquisition unit 242 acquires research technologies studied by each of the two conduct agents contained in the created conduct agent pair and extracts a certain number of research technologies ranked on the top of the acquired research technologies of each conduct agent.

That is, the research technology acquisition unit 242 acquires research technologies of the specific conduct agent from the database 220 and research technologies of conduct agent A from the database 220 for a conduct agent pair of the specific conduct agent and conduct agent A. Then, the research technology acquisition unit 242 extracts a certain number of research technologies ranked on the top of the acquired research technologies of each conduct agent. At this point, the number of the certain number of research technologies is the same in the two conduct agents, and being ranked on the top means being ranked on the top of research technologies that have produced research documents more than the others.

The research similarity calculation unit 243 obtains values of similarity variables by comparing the extracted research technologies for each conduct agent pair and obtains research similarity using the values of similarity variables. Here, the values of similarity variables refer to the number of common research technologies with respect to a certain number of research technologies and a ratio thereof, a ranking difference of a common research technology, and weight of research of a common research technology with respect to a certain number of research technologies. The number of common research technologies with respect to a certain number of research technologies and a ratio thereof refer to the number of research technologies commonly contained in the two conduct agents among the extracted research technologies of the two conduct agents and a ratio thereof, and the ranking difference of a common research technology refers to a difference between the ranking of a research technology, which is commonly contained in the two conduct agents, in the research technologies of the specific conduct agent and the ranking of the research technology in the research technologies of the comparison conduct agent. The weight of research of a common research technology with respect to the certain number of research technologies is accomplishment of the common research technology with respect to the research technologies. The accomplishment refers to the number of documents studied and developed by a corresponding conduct agent for a corresponding research technology or a point calculated by applying a weighting factor to the number of researched and developed documents.

For example, in the case where rankings of research technologies of conduct agent A are in order of technology a, technology b, technology c, technology d and technology e, and rankings of research technologies of conduct agent B are in order of technology a, technology c, technology e, technology f and technology g, common research technologies of the two conduct agents are technology a, technology c and technology e, and thus a ratio of the number of common research technologies to the research technologies is 3/5. The ranking difference of a common research technology may be the same for technology a, 1 for technology c, and 2 for technology e. The weight of research of a common research technology with respect to a certain number of technologies can be obtained by calculating an average of the weights of the common research technologies.

The research similarity calculation unit 243 obtains research similarity using at least one of a value of a similarity variable among similarity variables of the number of common research technologies with respect to a certain number of research technologies and a ratio thereof, a ranking difference of a common research technology and weight of research of a common research technology with respect to a certain number of research technologies, an average of the values of the three similarity variables, and a value of a similarity variable having the largest maximum value among the values of the three similarity variables. Although it is expressed as research similarity here, this may be a value of research similarity.

The research cooperativeness calculation unit 244 acquires common research technologies by comparing the extracted research technologies for each conduct agent pair, extracts joint research documents by comparing documents of each common research technology for each conduct agent pair, and obtains research cooperativeness based on the number of the joint research documents.

That is, the research cooperativeness calculation unit 244 acquires research technologies commonly contained in the two conduct agents among the research technologies of the two conduct agents as common research technologies and acquires documents corresponding to the common research technologies for each of the conduct agents. Then, the research cooperativeness calculation unit 244 compares the acquired documents of the common research technologies and determines if there is a joint research document jointly studied by the two conduct agents. If there is a joint research document as a result of the determination, the research cooperativeness, calculation unit 244 accumulates the number of joint research documents. Then, the research cooperativeness, calculation unit 244 obtains the accumulated number of joint research documents or a point calculated by applying a weighting factor to the number of joint research documents as a value of research cooperativeness. At this point, if there is a joint research document between the two conduct agents, the two conduct agents are in a cooperative research relation, and thus the research cooperativeness calculation unit determines that there is research cooperativeness. If there is no joint research document, it is determined that there is no research cooperativeness, between the two conduct agents. The research cooperativeness is a value of the research cooperativeness.

The research competitiveness calculation unit 245 obtains agents in a research competition relation by sorting conduct agent pairs that do not have research cooperativeness, among the conduct agent pairs comprising a comparison conduct agent and the specific conduct agent in descending order of a value of research similarity, and determines the value of research similarity of the obtained agents in a research competition relation as research competitiveness. Here, the agents in a research competition relation refer to a certain number of comparison conduct agents having a high value of research similarity among the conduct agent pairs that do not have research cooperativeness. The research competitiveness refers to a value of research similarity of the agents in a research competition relation, and thus it can be expressed in a value of research competition.

The research relation information providing module 250 provides research relation information including comparison conduct agents and corresponding research relation values based on the research relation obtained by the research relation calculation module 240. That is, the research relation information providing module 250 provides a certain number of comparison conduct agents and values of research similarity, values of research cooperativeness or values of research competitiveness in descending order of the values for each of the research similarity, research cooperativeness and research competitiveness. At this point, the research relation information providing module 250 displays the comparison conduct agents and the values on a screen for each of the research similarity, research cooperativeness and research competitiveness.

In other words, the research relation information providing module 250 sorts the conduct agents pairs in descending order of the value of research similarity, research cooperativeness or research competitiveness for each of the research similarity, research cooperativeness and research competitiveness, and extracts a certain number of conduct agent pairs ranked on the top. Then, the research relation information providing module 250 displays a certain number of the extracted conduct agent pairs (or the comparison conduct agents) and values of the conduct agent pairs as a list for each of the research similarity, research cooperativeness and research competitiveness.

If a specific conduct agent pair (or a specific comparison conduct agent) is selected from the list of conduct agent pairs provided by the research relation information providing module 250, the research technology information providing module 260 sorts and displays research technologies of the two conduct agents corresponding to the specific conduct agent pair in order of weight of research. At this point, the research technology information providing module 260 interconnects common research technologies among the displayed research technologies and displays the common research technologies by separating the common research technologies into technologies in a cooperative relation and technologies not in a cooperative relation.

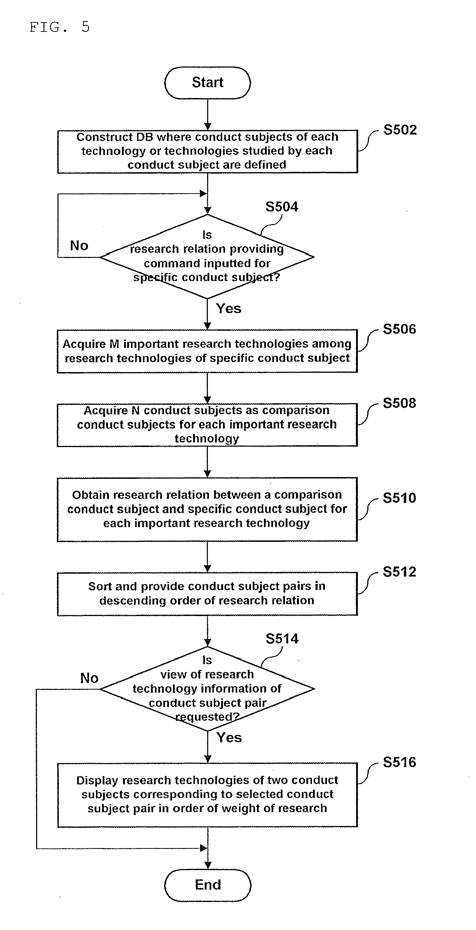

FIG. 5 is a flowchart illustrating a method of providing research relation information on a specific technology by a research relation service providing apparatus according to the present invention.

Referring to FIG. 5, the related technology service providing apparatus constructs a database where conduct agents of each technology defined in a technical terminology dictionary or technologies performed by each conduct agent are defined S502.

After performing step S502, if a user inputs a research relation providing command for a specific conduct agent S504, the research relation service providing apparatus acquires research technologies of the specific conduct agent by searching the constructed database and acquires M important research technologies from the acquired research technologies S506.

After performing step S506, the research relation service providing apparatus acquires N conduct agents as comparison conduct agents for each of the important research technologies S508. That is, the research relation service providing apparatus acquires conduct agents for each of the important research technologies by searching the database and acquires N conduct agents as comparison conduct agents among the acquired conduct agents. At this point, the research relation service providing apparatus acquires N conduct agents ranked on the top of the acquired conduct agents as the comparison conduct agents.

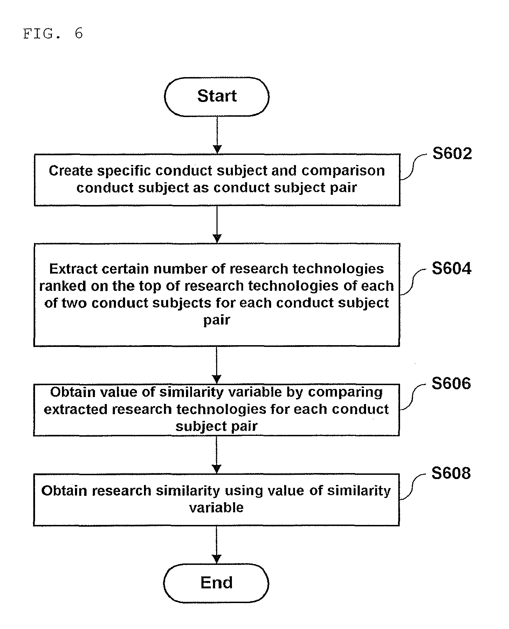

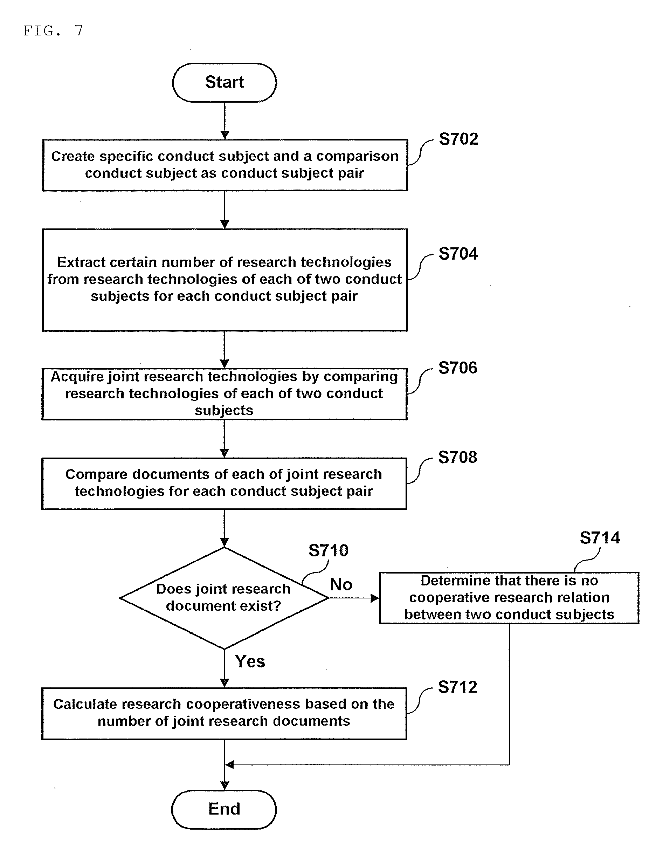

After performing step S508, the research relation service providing apparatus obtains a research relation between a comparison conduct agent and the specific conduct agent for each of the important research technologies S510. The research relation refers to research similarity, research cooperativeness, research competitiveness and the like. A method of obtaining the research similarity by the research relation service providing apparatus will be described referring to FIG. 6, and a method of obtaining the research cooperativeness will be described referring to FIG. 7.

The research competitiveness is determined such that agents in a research competition relation is obtained by sorting conduct agent pairs that do not have research cooperativeness, among the conduct agent pairs comprising a comparison conduct agent and the specific conduct agent in descending order of the research similarity, and a value of research similarity of the obtained agents in a research competition relation is determined as research competitiveness.

After performing step S510, the research relation service providing apparatus sorts and displays the conduct agent pairs on a screen in descending order of the obtained research relation S512. That is, the research relation service providing apparatus sorts the comparison conduct agents in descending order of research similarity, research cooperativeness, and research competitiveness respectively, and extracts a certain number of comparison conduct agents ranked on the top. Then, the research relation service providing apparatus displays the certain number of comparison conduct agents ranked on the top and corresponding values as a list for each of the research similarity, the research cooperativeness and the research competitiveness.

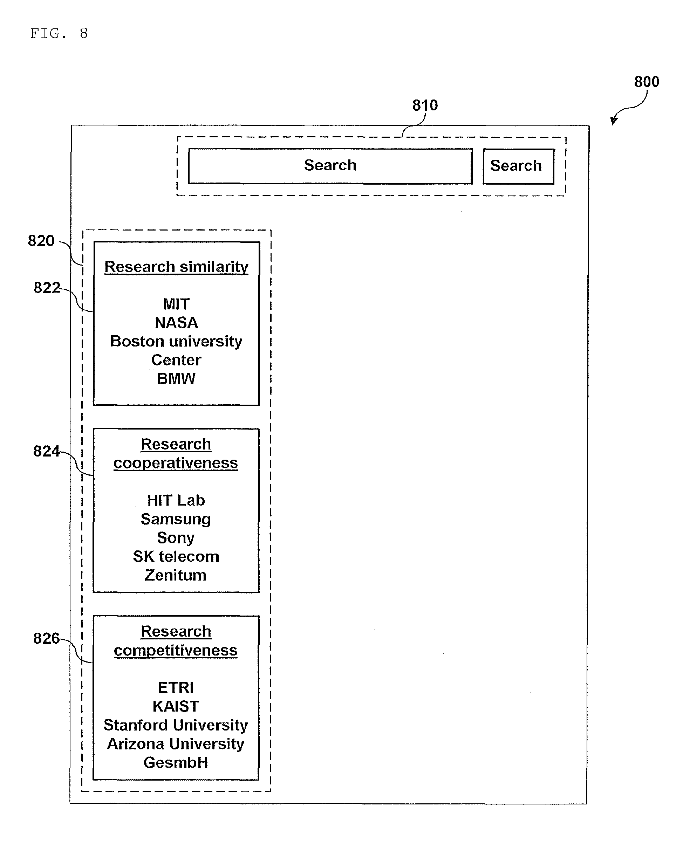

A research relation service providing screen for displaying the comparison conduct agents in descending order of the research relation by the research relation service providing apparatus is as shown in FIG. 8. Referring to FIG. 8, the research relation service providing screen 800 includes a specific conduct agent input area 810 and a research relation information providing area 820. A specific conduct agent inputted to provide research relation information is displayed in the specific conduct agent input area 810.

A certain number of comparison conduct agents are displayed in the research relation information providing area 820 in descending order of a value of research similarity, the research cooperativeness, or the research competitiveness for each of the research similarity, the research cooperativeness, and the research competitiveness. Although only the comparison conduct agents are displayed here, a value of a corresponding research relation can be displayed together with the comparison conduct agent.

Accordingly, the research relation information providing area 820 contains a research similarity information providing area 822, a research cooperativeness information providing area 824 and a research competitiveness information providing area 826. The research similarity information providing area 822 may display a certain number of comparison conduct agents having high research similarity to the specific conduct agent or a value of research similarity of each comparison conduct agent. The research cooperativeness information providing area 824 may display a certain number of comparison conduct agents having high research cooperativeness with the specific conduct agent or a value of research cooperativeness of each comparison conduct agent. The research competitiveness information providing area 826 displays a certain number of comparison conduct agents having high research competitiveness to the specific conduct agent.

The number of comparison conduct agents displayed in each of the research similarity information providing area 822, the research cooperativeness information providing area 824 and the research competitiveness information providing area 826 is the same.

After performing step S512, if a specific comparison conduct agent is selected from the provided list of comparison conduct agents and a view of research technology information is requested S514, the research relation service providing apparatus sorts and displays research technologies of two conduct agents corresponding to the selected specific conduct agent pair on a screen in order of weight of research S516.

At this point, the research relation service providing apparatus interconnects common research technologies among the displayed research technologies and displays the common research technologies by dividing the common research technologies into technologies in a cooperative relation and technologies not in a cooperative relation.

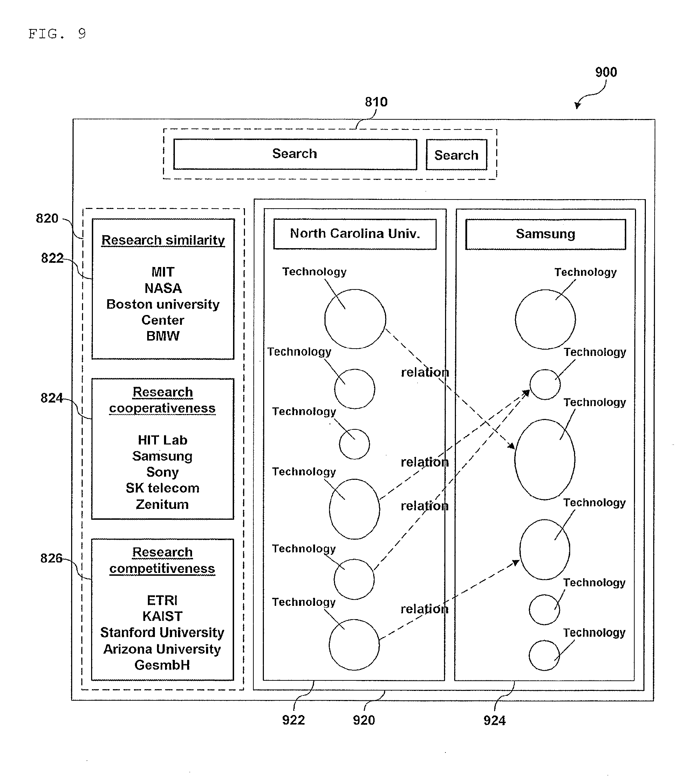

A screen of providing research technology information by the research relation service providing apparatus is as shown in FIG. 9. Referring to FIG. 9, a research technology information providing screen includes a specific conduct agent input area 810, a research relation information providing area 820, and a research technology information providing area 920.

The research technology information providing area 920 sorts and displays research technologies of a comparison conduct agent or a specific conduct agent selected in the research relation information providing area 820 in order of weight of research.

FIG. 6 is a flowchart illustrating a method of obtaining research similarity between conduct agents by a research relation service providing apparatus according to the present invention.

Referring to FIG. 6, the research relation service providing apparatus creates a specific conduct agent and a comparison conduct agent as a conduct agent pair S602. That is, the research relation service providing apparatus creates a conduct agent pair comprising two conduct agents such as comparison conduct agent 1 and the specific conduct agent, comparison conduct agent 2 and the specific conduct agent, and the like.

Then, the research relation service providing apparatus extracts a certain number of research technologies ranked on the top of research technologies of each of the two conduct agents for each conduct agent pair S604 and obtains a value of a similarity variable by comparing the extracted research technologies for each conduct agent pair S606. Here, the value of the similarity variable refers to the number of common research technologies with respect to the certain number of research technologies and a ratio thereof, a ranking difference of a common research technology, and weight of research of a common research technology with respect to a certain number of research technologies.

Then, the research relation service providing apparatus obtains research similarity between conduct agent pairs using the value of the similarity variable S608. That is, the research relation service providing apparatus obtains research similarity using at least one of a value of a similarity variable among similarity variables of the number of common research technologies with respect to a certain number of research technologies and a ratio thereof, a ranking difference of a common research technology and weight of research of a common research technology with respect to a certain number of research technologies, an average of the values of the three similarity variables, and a value of a similarity variable having the largest maximum value among the values of the three similarity variables.

FIG. 7 is a flowchart illustrating a method of obtaining research cooperativeness by a research relation service providing apparatus according to the present invention.

Referring to FIG. 7, the research relation service providing apparatus creates a specific conduct agent and a comparison conduct agent as a conduct agent pair S702. That is, the research relation service providing (← comparison) apparatus creates a conduct agent pair comprising two conduct agents such as comparison conduct agent 1 and the specific conduct agent, comparison conduct agent 2 and the specific conduct agent, and the like.

After performing step S702, the research relation service providing apparatus acquires research technologies studied by each of the two conduct agents for each conduct agent pair and extracts a certain number of research technologies ranked on the top of the acquired research technologies of each conduct agent S704.

After performing step S704, the research relation service providing apparatus acquires common research technologies by comparing the extracted research technologies for each conduct agent pair S706.

After performing step S706, the research relation service providing apparatus compares documents of each common research technology for each conduct agent pair S708 and determines if there is a joint research document S710.

If there is a joint research document as a result of the determination in step S710, the research relation service providing apparatus obtains research cooperativeness based on the number of joint research documents obtained for each conduct agent pair S712.

If there is no joint research document as a result of the determination in step S710, the research relation service providing apparatus determines that there is no cooperative research relation between the two conduct agents of the corresponding conduct agent pair S714.

According to the present invention described above, it is possible to provide a research relation such as research similarity, research cooperativeness, research competitiveness between or the like between conduct agents conducting a research on a technology.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A computer implemented method of providing a research relation service by a research relation service providing apparatus, the method comprising the steps of:
(a) acquiring research technologies of a specific conduct agent;
(b) acquiring comparison conduct agents for each of the acquired research technologies;
(c) acquiring research technologies studied by each of two conduct agents for each conduct agent pair comprising a comparison conduct agent and the specific conduct agent, extracting a certain number of research technologies ranked on a top of the acquired research technologies of each conduct agent, and obtaining a value of research relation including at least one of a value of research similarity, a value of research cooperativeness and a value of research competitiveness between each compared agent and the specific agent by comparing the extracted research technologies for each conduct agent pair; and
(d) sorting and providing the comparison conduct agents in descending order of the value of research relation.

2. The method according to claim 1, further comprising the step of, before step (a), extracting research technologies and conduct agents by analyzing documents stored in a multi-document providing apparatus, accumulating conduct agents of each technology or technologies of each conduct agent, and constructing a database for storing the conduct agents of each technology or the technologies studied by each conduct agent.

3. The method according to claim 2, wherein the database stores at least one of conduct agents of each technology, research technologies of each conduct agent, joint research agents of each conduct agent, the number of joint research technologies of each conduct agent and a ratio thereof, the number of joint research documents of each conduct agent, and an accomplishment point calculated by applying a weighting factor of each time point or of each document type to the number of joint research documents.

4. The method according to claim 1, wherein the value of research similarity is obtained by acquiring research technologies studied by each of the two conduct agents for each conduct agent pair comprising a comparison conduct agent and the specific conduct agent, extracting a certain number of research technologies ranked on a top of the acquired research technologies of each conduct agent, obtaining a value of a similarity variable by comparing the extracted research technologies for each conduct agent pair, and using the value of the similarity variable.

5. The method according to claim 4, wherein the value of the similarity variable includes at least one of the number of common research technologies with respect to a certain number of research technologies and a ratio thereof, a ranking difference of a common research technology, and weight of research of a common research technology with respect to a certain number of research technologies.

6. The method according to claim 5, wherein the value of research similarity is a value obtained using at least one of a value of a similarity variable among similarity variables of the number of common conduct agents with respect to the conduct agents and a ratio thereof, a ranking difference of a common conduct agent and weight of research of a common conduct agent with respect to a certain number of conduct agents, an average of the values of the three similarity variables, and a value of a similarity variable having a largest maximum value among the values of the three similarity variables.

7. The method according to claim 1, wherein the value of research cooperativeness is obtained by acquiring research technologies studied by each of the two conduct agents for each conduct agent pair comprising a comparison conduct agent and the specific conduct agent, extracting a certain number of research technologies ranked on a top of the acquired research technologies of each conduct agent, obtaining common research technologies by comparing the extracted research technologies for each conduct agent pair, extracting joint research documents by comparing documents of each common research technology for each conduct agent pair, and using the number of the joint research documents.

8. The method according to claim 7, wherein the value of research cooperativeness is the number of joint research documents or a point calculated by applying a weighting factor to the number of joint research documents.

9. The method according to claim 1, wherein the value of research competitiveness is obtained by obtaining agents in a research competition relation by sorting conduct agent pairs that do not have a value of research cooperativeness among the conduct agent pairs comprising a comparison conduct agent and the specific conduct agent in descending order of a value of research similarity, and determining the value of research similarity of the obtained agents in a research competition relation as the value of research competitiveness.

10. The method according to claim 1, wherein step (d) includes the steps of:
sorting the conduct agent pairs in descending order of each of the value of research similarity, the value of research cooperativeness and the value of research competitiveness, and extracting a certain number of conduct agent pairs ranked on a top; and
displaying the conduct agent pairs extracted based on the value of research similarity, the value of research cooperativeness and the value of research competitiveness or comparison conduct agents of the extracted conduct agent pairs as a list.

11. The method according to claim 10, further comprising the step of, after step (d), if two comparison conduct agents or one comparison conduct agent and the specific conduct agent are selected from the displayed list of comparison conduct agents, sorting and displaying research technologies of two conduct agents corresponding to the selected conduct agent pair in order of weight of research.

12. The method according to claim 11, wherein common research technologies among the displayed research technologies are interconnected, and the common research technologies are displayed after being separated into technologies in a cooperative relation and technologies not in a cooperative relation.

13. A research relation service providing apparatus including a storage and a processor, the apparatus comprising:
a research relation calculation module for acquiring research technologies of a specific conduct agent, acquiring comparison conduct agents for each of the acquired research technologies, acquiring research technologies studied by each of two conduct agents for each conduct agent pair comprising a comparison conduct agent and the specific conduct agent, extracting a certain number of research technologies ranked on a top of the acquired research technologies of each conduct agent, and obtaining a value of research relation including at least one of a value of research similarity, a value of research cooperativeness and a value of research competitiveness between each compared agent and the specific agent by comparing the extracted research technologies for each conduct agent pair, by the processor; and
a research relation information providing module for sorting the comparison conduct agents in descending order of the obtained value of research relation and providing information on the research relation, by the processor.

14. The apparatus according to claim 13, further comprising a database for storing at least one of conduct agents of each technology, research technologies of each conduct agent, joint research agent of each conduct agent, the number of joint research technologies of each conduct agent and a ratio thereof, the number of joint research documents of each conduct agent, and an accomplishment point calculated by applying a weighting factor of each time point or of each document type to the number of joint research documents.

15. The apparatus according to claim 13, further comprising a database construction module for extracting and accumulating research technologies and conduct agents by analyzing documents stored in a multi-document providing apparatus, and constructing a database for storing conduct agents of each technology or technologies studied by each conduct agent.

16. The apparatus according to claim 13, further comprising a research technology information providing module for, if two comparison conduct agents or one comparison conduct agent and the specific conduct agent are selected from the provided list of comparison conduct agents, sorting and displaying research technologies of two conduct agents corresponding to the selected conduct agent pair in order of weight of research.

17. The apparatus according to claim 16, wherein if there are common research technologies among the displayed research technologies, the research technology information providing module interconnects corresponding common research technologies and displays the common research technologies by separating the common research technologies into technologies in a cooperative relation and technologies not in a cooperative relation.

18. The apparatus according to claim 13, wherein the research relation calculation module includes:
a conduct agent pair creation unit for acquiring research technologies of the specific conduct agent, acquiring comparison conduct agents of each acquired research technology, and creating conduct agent pairs comprising a comparison conduct agent and the specific conduct agent;
a research technology acquisition unit for acquiring research technologies studied by each of the two conduct agents contained in the created conduct agent pair and extracting a certain number of research technologies ranked on a top of the acquired research technologies of each conduct agent;
a research similarity calculation unit for obtaining a value of a similarity variable by comparing the extracted research technologies for each conduct agent pair and obtaining a value of research similarity using the value of the similarity variable;
a research cooperativeness calculation unit for acquiring common research technologies by comparing the extracted research technologies for each conduct agent pair, extracting joint research documents by comparing documents of each common research technology for each conduct agent pair, and obtaining a value of research cooperativeness based on the number of the joint research documents; and
a research competitiveness calculation unit for obtaining agents in a research competition relation by sorting conduct agent pairs that do not have a value of research cooperativeness among the conduct agent pairs comprising a comparison conduct agent and the specific conduct agent in descending order of a value of research similarity, and determining the value of research similarity of the obtained agents in a research competition relation as a value of research competitiveness.

19. The apparatus according to claim 18, wherein the value of the similarity variable includes at least one of the number of common research technologies with respect to a certain number of research technologies and a ratio thereof, a ranking difference of a common research technology, and weight of research of a common research technology with respect to a certain number of research technologies.

20. The apparatus according to claim 19, wherein the value of research similarity is a value obtained using at least one of a value of a similarity variable among similarity variables of the number of common conduct agents with respect to the conduct agents and a ratio thereof, a ranking difference of a common conduct agent and weight of research of a common conduct agent with respect to a certain number of conduct agents, an average of the values of the three similarity variables, and a value of a similarity variable having a largest maximum value among the values of the three similarity variables.

21. The apparatus according to claim 18, wherein the value of research cooperativeness is the number of joint research documents or a point calculated by applying a weighting factor to the number of joint research documents.

22. The apparatus according to claim 13, wherein the research relation information providing module
sorts the conduct agent pairs in descending order of each of the value of research similarity, the value of research cooperativeness and the value of research competitiveness, extracts a certain number of conduct agent pairs ranked on a top, and displays the conduct agent pairs extracted based on the value of research similarity, the value of research cooperativeness and the value of research competitiveness or comparison conduct agents of the extracted conduct agent pairs as a list.
